# EUROPEAN PATENT APPLICATION

(11) **EP 0 996 055 A2**
(43) Date of publication of application: **26.04.2000**
(21) Application number: 99308126.4
(22) Date of filing: 14.10.1999
(51) Int. Cl.: G06F 3/12

(54) **Network printer system and method of processing waiting print job when print error occurs**

(30) Priority: 21.10.1998 KR 9844188
(71) Applicant: SAMSUNG ELECTRONICS CO., LTD., Suwon-City, Kyungki-do (KR)
(72) Inventor: Han, Jeong-Soo, Bundang-gu, Sungnam-city, Kyungki-do (KR)
(74) Representative: Brandon, Paul Laurence

(57) **Abstract**

A method of processing a waiting print job of a printer is provided in which a print error occurs in a network printer system to which a plurality of printers are connected and a plurality of user computers are connected to use the printers in common. According to the method, whether a print error interrupting printing has occurred is determined (step A). If a print error is determined to have occurred in step A, a waiting print job of a printer is transmitted in which a print error has occurred to a working printer. Thus, a received waiting print job of one printer in which a print error interrupting printing occurs can be transferred to another working printer so that interruption of printing of the waiting job can be avoided. A corresponding system is also disclosed.

## Description

The present invention relates to network printer systems and methods of processing a waiting print job when a print error occurs.

In a network printer system, a plurality of computers and a plurality of printers are connected to each other through a network. A printer connected to the network printer system receives print data from a user computer connected through the network and prints a corresponding image on paper.

The printer prints a received waiting print job in the order that data is received, i.e., according to a job processing order determined by the principle of first-in first-out (FIFO). When a printing error occurs, for example, out of paper or developer, a paper jam, or other serious problems, preventing further printing, the conventional printer stops printing and indicates an error message requiring a user to solve the problem. When a print error occurs, printing is not possible any longer until the error is solved. If the print error can be solved on the spot, for example, printing stopped due to an out-of-paper error, printing can resume immediately by supplying more paper.

However, when a plurality of users use one printer connected to a network and apart from them such that it is not easy to check the printer error visually, fixing the printer error is delayed and printing of data already sent to the printer is delayed as well. Furthermore, if the printer error is serious requiring a service technician, a user must give up the already sent print data and inconveniently sends the same print data to another working printer.

It is an aim of preferred embodiments of the present invention to provide a network system which enables a received waiting print job in one printer to be printed by another working printer, when a disabling print error occurs in one printer, and a method of processing a waiting print job when a print error occurs.

According to a first aspect of the invention, there is provided a method of processing a waiting print job of a printer in which a print error occurs in a network printer system to which a plurality of printers are connected and a plurality of user computers are connected to use the printers in common, the method comprising the steps of (A) determining whether a print error interrupting printing has occurred, and (B) if a print error is determined to have occurred in the step (A), transferring a waiting print job of a printer in which a print error has occurred to a working printer.

According to another aspect of the invention, there is provided a network printer system to which a plurality of printers are connected and a user computers are connected to use the printers in common, which comprises a redirection portion in the printer for transferring waiting print job data stored in a memory storage to another working printer when a print error interrupting printing occurs.

Further features of the present invention are set out in the appended claims.

The present invention will become more apparent by describing in detail a preferred embodiment thereof, by way of example only, with reference to the attached drawings; in which:
FIG. 1 is a block diagram showing a network printer system to which the present invention is applied;
FIG. 2 is a block diagram showing the structure of the printer of FIG. 1; and
FIG. 3 is a flow chart for explaining steps of processing a waiting print job according to the present invention when a print error occurs.

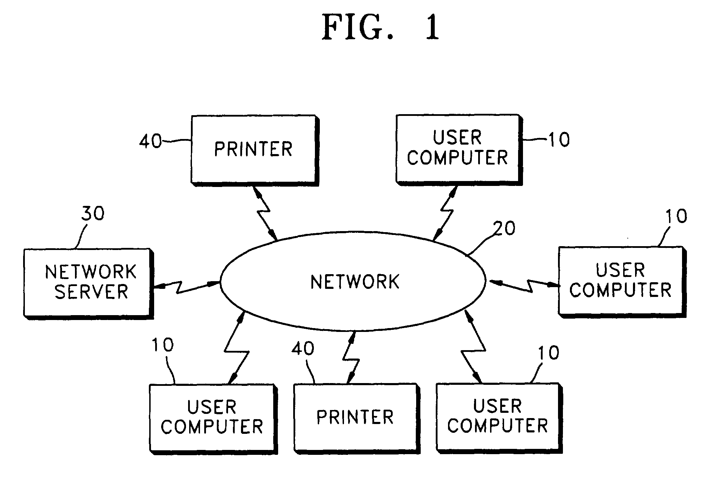

FIG. 1 shows a network printer system according to the present invention. Referring to the drawing, a plurality of user computers 10 and a plurality of printers 40 are connected to one another through a network 20. A network server 30 relays data transmission between the user computers 10, the user computers 10 and the printers 40, and the printers 40 to the printers 40.

In the network printer system, each of the user computers 10 is provided with a CPU, a ROM, a RAM, a memory storage, an input device, and a network interface device. The input device includes a keyboard and a mouse and the network interface device is, for example, a LAN card. In the memory storage, application programs for editing text and a printer driver that is a program for setting print options and printing environments and converting text to be printed into a printer language and outputting the converted printer language are installed.

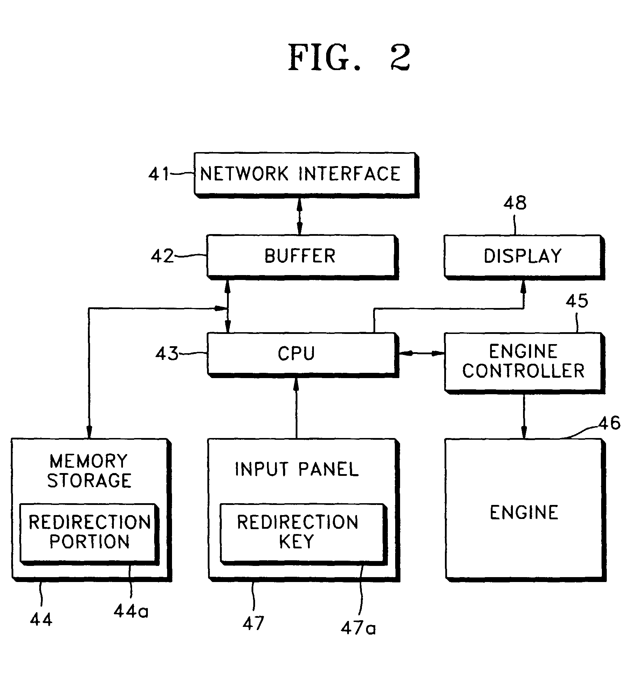

The printers 40, as shown in FIG. 2, are each provided with a network interface 41, a buffer 42, a memory storage 44, a CPU 43, an engine controller 45, an engine 46, an input panel 47, and a display 48.

The network interface 41 is a LAN card which communicates with the network server 30. The buffer 42 temporarily stores received data or data to be output.

The CPU 43 controls the overall operation of the printers 40 such as reading and processing of received data. The engine controller 45 controls the operation of the engine 46 to print an image corresponding to image data input through the CPU 43 on the paper. Printing error information such as out of paper, paper jam, and out of toner preventing printing is detected by the engine controller 45 for monitoring the operation of the engine 46 by a sensor (not shown) and provided to the CPU 43.

The input panel 47 is provided with a plurality of keys for setting printing environments and a redirection key 47a for transferring a received waiting print job to another working printer when a print error occurs.

In the memory storage 44, a received waiting print job and operating programs of the CPU 43 are installed. A redirection portion 44a installed in the memory storage 44, which is one of the operating programs of the CPU 43, is executed when the redirection key 47a of the input panel 47 is set to be turned on and a print error occurs. In addition to the above manipulation of the redirection key 47a of the input panel 47, the execution of the redirection portion 44a can be selected by a user through a printer settings menu provided by the printer driver installed in the memory storage of the computers 10. In this case, the printer driver enables a user to select a redirection selection menu in the settings of the connected printers 40.

When a print error interrupting printing such as out of paper, paper jam, out of toner, and other operational error of elements in the engine 46 occurs, the redirection potion 44a transfers a waiting print job stored in the memory storage 44 to another working printer.

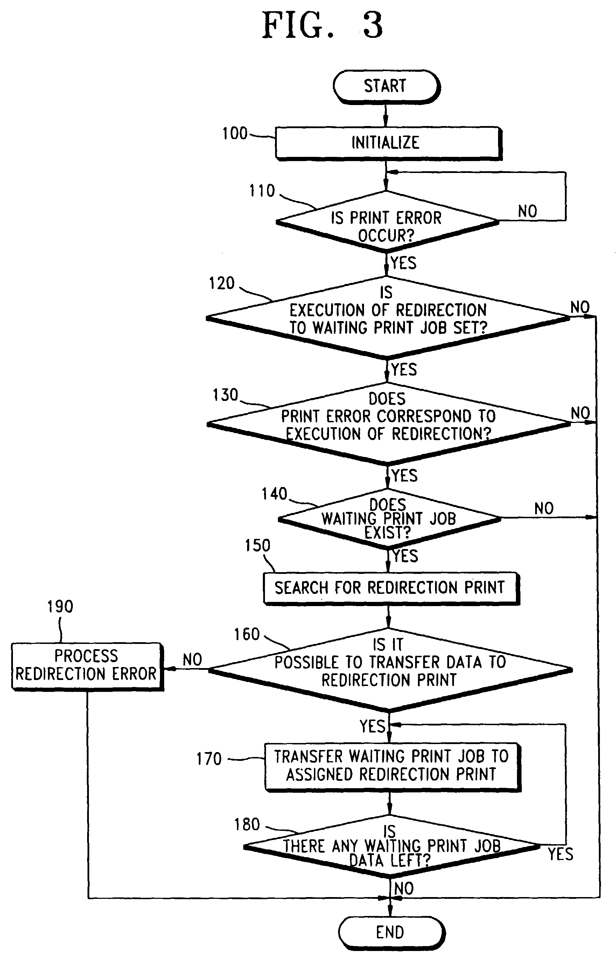

The steps of processing a waiting print job, when a print error occurs, in the network printer system having the above structure is described with reference to FIG. 3.

First, as an initialization step, conditions needed for the execution of redirection are set (step 100). For example, types of print errors subject to the execution of redirection are set and a redirection printer to which a waiting print job is transferred is set. When only two printers 40 are installed on the network 20, the first printer 40 sets the second printer 40 as a redirection printer and the second printer 40 sets the first printer 40 as a redirection printer. However, when three or more printers 40 which can be assigned as a redirection printer are connected to the network 20, multiple redirection printers can be set. That is, one printer 40 can set multiple printers as redirection printers. Here, the order of priority should be given to the redirection printers.

As the type of print errors, for example, there is "out of paper", "out of toner", "paper jam", and "incorrect paper size" (difference between the paper size set in the text and that provided by the printer). A user sets part of, or all of, the above-mentioned print errors as a print error by which redirection is executed. Priority to the redirection printers can be given in various ways. For example, priority can be given to a printer located close to the printer transferring print data.

After the above initialization step, the printer 40 stores the received print data in a queue of the memory storage 44 and processes a waiting print job according to the principle of first-in first-out so that first received print data is printed first. If a print error occurs during the above printing process (step 110), it is determined whether redirection is set by the redirection key 47a of the printer 40 or received information of the printer settings menu from the user computer 10 (step 120).

If the redirection is determined to be set in step 120, it is determined whether the type of a print error corresponds to the print error subject to the execution of redirection (step 130). When the type of a print error belongs to the redirection execution errors set by the user, whether a waiting print job exists in the memory storage 44 is searched (step 140).

If it is determined in step 140 that a waiting print job exists, the redirection printers are searched in an order of priority whether a print job is possible (step 150). When it is determined in step 150 that the waiting print job data can be transferred from a printer having a print error to a set redirection printer (step 160), the waiting print job is transferred to the set redirection printer (step 170).

When it is determined in step 150 that the redirection printers are in a data off-line mode in which receiving data is not possible or in a state in which a printing process cannot be performed due to a print error, a redirection execution error message is indicated by the display 48 (step 190). After step 170, it is determined whether there is any remaining waiting print job data (step 180). If it is determined in step 180 that a waiting print job data remains, step 170 is repeated until no waiting print job is left.

As described above, in the network printer system and the method of processing a waiting print job when a print error occurs according to preferred embodiments of the present invention, a received waiting print job of one printer in which a print error interrupting printing occurs can be transferred to another working printer so that interruption of printing of the waiting job can be avoided.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A method of processing a waiting print job of a printer in which a print error occurs in a network printer system to which a plurality of printers are connected and a plurality of user computers are connected to use the printers in common, said method comprising the steps of:
(A) determining whether a print error interrupting printing has occurred; and
(B) if a print error is determined to have occurred in said step (A), transferring a waiting print job of a printer in which a print error has occurred to a working printer.

2. A method of processing a waiting print job of a printer in which a print error occurs in a network printer system to which a plurality of printers are connected and a plurality of user computers are connected to use the printers in common, said method comprising the steps of:
(A) determining whether a print error interrupting printing has occurred;
(B) if a print error is determined to has occurred in said step (A), determining whether an execution of redirection by which a waiting print job of a printer in which a print error has occurred is transferred to a working printer is set;
(C) if the execution of redirection is determined to be set in said step (B), determining whether the type of said print error corresponds to said execution of redirection;
(D) if said type of said print error is determined to correspond to said execution of redirection in said step (C), determining whether a waiting print job exists;
(E) if it is determined in said step (D) that a waiting print job exists, searching for a printer to be assigned as a redirection printer; and
(F) if it is determined in said step (E) that assigning a redirection printer is possible, assigning a redirection printer and transferring waiting print job data to the assigned redirection printer.

3. A method as claimed in claim 2, further comprising a step of (G) if it is determined in said step (E) that assigning a redirection printer is not possible, processing a redirection execution error and displaying the result.

4. A network printer system (10, 20, 30, 40) to which a plurality of printers (40) are connected and a user computers are connected to use said printers in common, further comprises a redirection portion (43, 45, 46, 47)in the printer for transferring waiting print job data stored in a memory storage (44) to another working printer when a print error interrupting printing occurs.
